Europäisches Patentamt

European Patent Office

Office européen des brevets

(19)

(11) **EP 0 921 086 A1**

(12) **DEMANDE DE BREVET EUROPEEN**

(43) Date de publication:
     **09.06.1999 Bulletin 1999/23**

(51) Int Cl.$^6$: **B65H 23/00, A23L 3/36**

(21) Numéro de dépôt: **98460054.4**

(22) Date de dépôt: **03.12.1998**

(84) Etats contractants désignés:
     **AT BE CH CY DE DK ES FI FR GB GR IE IT LI LU MC NL PT SE**
     Etats d'extension désignés:
     **AL LT LV MK RO SI**

(30) Priorité: **03.12.1997 FR 9715515**

(71) Demandeur: **C.I.M.S.**
     **72302 Sablé-sur-Sarthe (FR)**

(72) Inventeur: **Munoz, Yves**
     **72300 Auvers-le-Hamon (FR)**

(74) Mandataire: **Vidon, Patrice**
     **Cabinet Patrice Vidon,**
     **Immeuble Germanium,**
     **80, Avenue des Buttes-de-Coesmes**
     **35700 Rennes (FR)**

(54) **Dispositif pour le contrôle de la vitesse d'un film sur une bobine d'enroulement**

(57)  L'invention concerne un dispositif pour le contrôle de la vitesse d'enroulement d'un film (1) sur une bobine d'enroulement (2) actionnée par un moteur (3), ledit film présentant une vitesse linéaire de défilement prédéterminée, ledit dispositif étant caractérisé en ce qu'il comprend un bras mobile (4) dont une extrémité libre (4a) repose sur une surface de ladite bobine d'enroulement (1) et dont l'autre extrémité (4b) est montée en rotation sur un axe de rotation (5) ; des moyens de mesure (6) de l'angle a formé entre un plan P de référence et le plan P' passant par ladite extrémité libre et ledit axe de rotation; des moyens de calcul (7) permettant de déduire de l'angle a mesuré le diamètre correspondant D de la bobine ; et des moyens électroniques (8) permettant d'adapter en continu la vitesse d'enroulement ($V_{bobine}$) correspondant au diamètre D calculé pour maintenir ladite vitesse de défilement linéaire prédéterminée dudit film.

Fig. 1

## Description

L'invention concerne le domaine des installations mettant en oeuvre un film en défilement, notamment en matière plastique, destiné à être enroulé sur une bobine d'enroulement.

L' invention trouve tout particulièrement son application dans les installations mettant en oeuvre un film convoyeur et notamment dans les installations utilisées pour "croûter" les produits alimentaires juste avant de les faire transiter dans une installation de congélation. On notera toutefois que l'invention pourra également trouver son application dans d'autres types d'installations.

Dans ce type d'installation, décrite notamment dans le brevet français FR2693877, le produit alimentaire défile sur un film convoyeur mince glissant en contact avec un support réfrigéré dans lequel un réfrigérant à basse température est recyclé en circuit fermé. Dès son contact avec le support réfrigéré, le dessous des produits commence à surgeler (croûter) et la forme du produit se trouve ainsi figée. Grâce à un tel croûtage de la face inférieure du produit, celui-ci est alors suffisamment rigide pour être facilement et rapidement congelé. En pratique, cette technique nécessite une minute à peine pour surgeler jusqu'à 1 mm les dessous des produits alimentaires.

Pour des raisons d'hygiène, le film convoyeur en matière plastique sur lequel sont déposés les produits n'est pas réutilisé. Il est donc soutiré d'une bobine de film propre avant de parvenir sur le support réfrigéré et enroulé en continu sur une bobine d'enroulement actionnée en rotation par un moteur, après avoir transité sur ce support réfrigéré.

Un des problèmes inhérents à ce type d'installation résulte de la difficulté de contrôler la vitesse de rotation de la bobine d'enroulement de façon à permettre l'obtention d'une vitesse linéaire de défilement de ce film sur le support réfrigérant la plus constante possible et donc une alimentation régulière et continue du système de congélation.

Afin d'obtenir une vitesse linéaire de défilement du film plastique essentiellement constante, la vitesse de rotation (en tours par minute) de la bobine doit décroître au fur et à mesure que l'épaisseur de film déjà enroulée sur celle-ci croît.

Dans l'état de la technique, la vitesse de défilement du film plastique est contrôlée par un tachymètre relié à une petite bobine placée en contact avec le film convoyeur juste à sa sortie du support réfrigéré qui agit sur la vitesse de rotation de la bobine d'enroulement. Or, un tel dispositif s'est révélé particulièrement sensible à l'air froid provenant du système de congélation prévu juste en aval de l'installation de croûtage. Il en résulte un glissement du film sur la bobine d'enroulement conduisant à une perturbation de la vitesse de rotation de la bobine d'enroulement et, corollairement, à une perturbation de la vitesse linéaire de défilement du film convoyeur sur le support réfrigéré.

L'objectif de la présente invention est de proposer un dispositif pour le contrôle de l'enroulement d'un film plastique ne présentant pas un tel inconvénient.

Notamment, un objectif de la présente invention est de décrire un tel dispositif autorisant une vitesse linéaire de défilement régulière de ce film.

Encore un objectif de la présente invention est de divulguer un tel dispositif qui puisse être facilement installé sur les installations existantes.

Ces différents objectifs sont atteints grâce à l'invention qui concerne un dispositif pour le contrôle de la vitesse d'enroulement d'un film plastique sur une bobine d'enroulement actionnée par un moteur, ledit film présentant une vitesse linéaire de défilement prédéterminée,

ledit dispositif étant caractérisé en ce qu'il comprend:

- un bras mobile dont une extrémité libre repose sur une surface de ladite bobine d'enroulement et dont l'autre extrémité est montée en rotation sur un axe de rotation;
- des moyens de mesure de l'angle a formé entre un plan P de référence et le plan P' passant par ladite extrémité libre et ledit axe de rotation;
- des moyens de calcul permettant de déduire de l'angle a mesuré le diamètre correspondant D de la bobine;
- des moyens électroniques permettant d'adapter en continu la vitesse d'enroulement ($V_{bobine}$) correspondant au diamètre D calculé pour maintenir ladite vitesse de défilement linéaire prédéterminée dudit film.

Les moyens techniques proposés par la présente invention permettent ainsi de maintenir constante la vitesse linéaire de défilement du film en matière plastique.

En pratique, l'enroulement progressif du film sur la bobine conduit à une augmentation progressive du diamètre de celle-ci. L'extrémité libre du bras reposant sur la surface de cette bobine connaît donc un mouvement résultant de l'augmentation de ce diamètre. Grâce aux moyens techniques préconisés par l'invention il est possible de traduire ce mouvement par un diamètre correspondant de bobine. Ensuite, ce diamètre est utilisé pour calculer la vitesse d'enroulement du film correspondant à la vitesse de rotation adéquate de la bobine et permettant de conserver la vitesse linéaire de défilement prédéterminée du film plastique.

Bien que l'on pourra envisager de faire reposer l'extrémité libre du bras du dispositif selon l'invention sur une autre surface de la bobine, par exemple sur la surface inférieure en prévoyant des moyens de rappel tels qu'un ressort contre la bobine, cette surface de contact sera préférentiellement la surface supérieure dont la tangente est à l'horizontale. Un tel positionnement permettra de faire reposer l'extrémité libre du bras par gravité sur la bobine et d'observer l'amplitude maximale de l'angle a.

Selon une variante préférentielle de l'invention, lesdits moyens permettant d'adapter en continu la vitesse d'enroulement ($V_{bobine}$) de la bobine d'enroulement utilisent la courbe de référence :

$$V_{Bobine} = \frac{V_L}{\Pi D}$$

dans laquelle $V_L$ est la vitesse linéaire de défilement du film et D est le diamètre de la bobine.

Préférentiellement, ladite extrémité libre dudit bras est pourvue d'un galet fou. Un tel galet fou permet au bras de coopéeré avec une surface minimum de la bobine et de ne pas constituer un élément susceptible de perturber l'enroulement du film sur celle-ci.

On notera également qu'afin de permettre au bras de ne pas gêner l'augmentation de la taille de la bobine, celui-ci présentera préférentiellement une forme courbe, par exemple en arc-de-cercle.

Selon l'éloignement de l'axe de rotation sur lequel est monté le bras de la bobine, l'amplitude de l'angle a observée sera plus ou moins grande. Afin d'observer une amplitude la plus importante possible, il sera intéressant de prévoir cet axe le plus près possible de la bobine. Toutefois, un tel rapprochement entre ces deux éléments sera limité par le diamètre maximal de la bobine. En conséquence, selon une variante de l'invention le dispositif selon l'invention comprend avantageusement des moyens d'amplification de l'angle a mesuré. De tels moyens d'amplification de l'angle a mesuré pourront ainsi efficacement inclurent un système de couplage à double engrenage.

Comme déjà précisé ci-dessus, le dispositif selon la présente invention est tout particulièrement adapté pour résoudre le problème technique résultant de l'enroulement des films convoyeurs dans les installations pour le croûtage de produits alimentaires. L'invention porte donc également sur toute installation de ce type incluant un film convoyeur en matière plastique défilant sur un support réfrigérant, ledit film étant extrait d'une bobine de stockage et étant enroulé sur une bobine d'enroulement après avoir transité sur le support réfrigéré,

caractérisée en ce qu'elle inclut un dispositif de contrôle de la vitesse d'enroulement de ladite bobine tel que décrit ci-dessus.

L'invention, ainsi que les différents avantages qu'elle présente seront plus facilement compris grâce à la description qui va suivre d'un mode non limitatif de réalisation de celle-ci en référence aux dessins dans lesquels :

- la figure 1 représente une vue schématique d'un dispositif pour le contrôle de la vitesse d'enroulement d'un film sur une bobine d'enroulement selon la présente invention,

- la figure 2 représente la courbe $V_{bobine} = V_L /\pi D$, utilisée par le dispositif selon la présente invention.

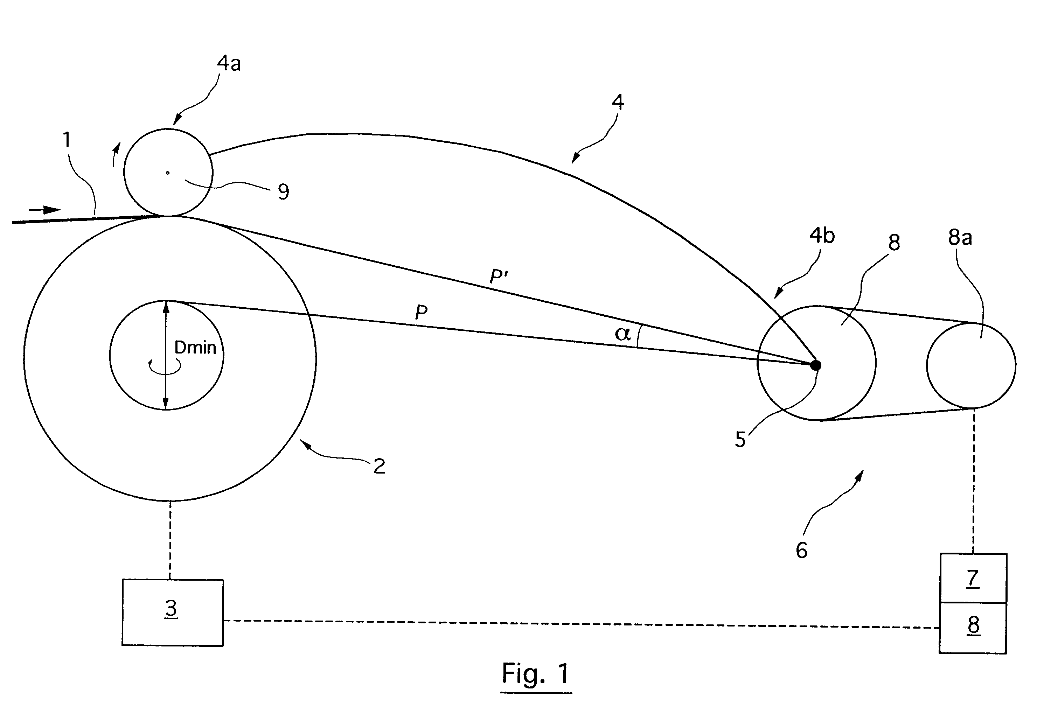

En référence à la figure 1, le dispositif décrit peut être utilisé pour contrôler la vitesse variable d'enroulement d'un film 1 sur une bobine 2 inculquée par un moteur 3.

Afin de permettre le défilement du film 1 à une vitesse linéaire constante prédéterminée, la vitesse de rotation de la bobine $V_{bobine}$ doit diminuer au fur et à mesure que le diamètre de la bobine augmente, c'est-à-dire au fur et à mesure de l'enroulement du film sur la bobine 2.

Sur la figure 1, le diamètre minimum de la bobine $D_{min}$ est indiqué et correspondant au diamètre du noyau de celle-ci avant que l'enroulement du film ait débuté. Dans le cadre du présent exemple de réalisation, ce diamètre est de 90 mm mais pourra bien sûr être différent dans d'autres modes de réalisation. Le diamètre maximum de la bobine d'enroulement $D_{max}$ est indiqué en ligne pointillé et dans le cadre du présent mode de réalisation est de 400 mm. Il pourra aussi être différent dans d'autres modes de réalisation. La figure 1 montre un diamètre de bobine D intermédiaire.

Afin de contrôler la vitesse d'enroulement inculquée à la bobine 2 par le moteur 3 dans le but de garder une vitesse linéaire de défilement du film constante, le dispositif proposé par la présente invention comprend les éléments constitutifs suivants:

- un bras mobile 4 dont une extrémité 4a est pourvue d'un galet fou 9 et repose sur la surface supérieure horizontale de la bobine et donc l'autre extrémité 4b est montée en rotation sur un axe de rotation 5;
- des moyens 6 permettant de mesure l'angle a formé par le plan P' passant entre ladite surface de contact de l'extrémité 4a avec la bobine et un plan de référence P;
- des moyens permettant d'amplifier cet angle constitué par un système à double engrenage 8, 8a;
- un calculateur 7 permettant de déduire de l'angle a mesuré, le diamètre D correspondant de la bobine et,
- un calculateur 8 permettant d'en déduire la vitesse correspondante de la bobine adéquate pour maintenir la vitesse de défilement linéaire du film et de l'inculquer au moteur 3 actionnant la bobine 2.

Dans le cadre du présent mode de réalisation, le plan P de référence est constitué par le plan passant par le point de tangence de la surface de la bobine avec l'horizontale lorsque celle-ci présente sont diamètre minimum $D_{min}$ et l'axe 5. On pourra toutefois choisir un autre plan de référence, comme par exemple l'horizontale.

Le fonctionnement du dispositif est le suivant.

Au fur et à mesure de l'enroulement du film 1 sur la bobine 2, le diamètre D de celle-ci augmente ce qui entraîne un déplacement vertical vers le haut de l'extrémité 4a du bras et consécutivement une augmentation progressive de l'angle a.

L'angle a est mesuré grâce aux moyens 6 et le diamètre D correspondant de la bobine est déduit grâce au calculateur 7. Le calculateur 8 associe alors au diamètre D une vitesse correspondante $V_{bobine}$ à inculquer à la bobine d'enroulement via le moteur 3 de façon à conserver en permanence la vitesse linéaire de défilement du film.

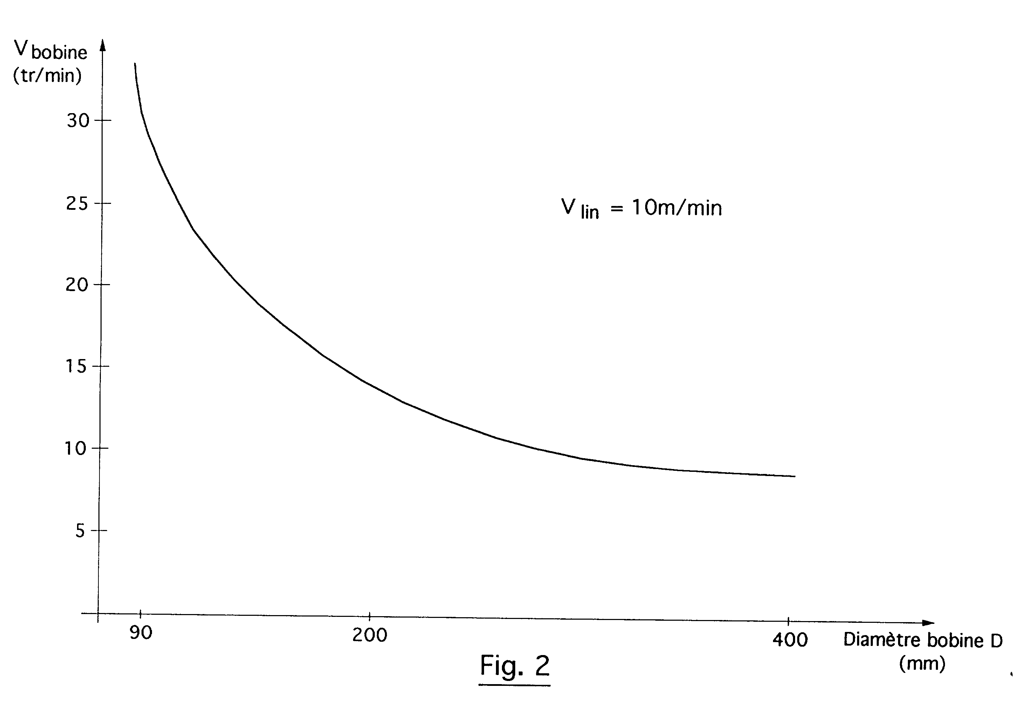

Dans ce but, le calculateur 3 utilise la courbe de référence montrée à la figure 2. Cette courbe correspond à une courbe de référence pour une vitesse linéaire de défilement du film $V_{lin}$ de 10 m/min (Si une autre vitesse de défilement du film est souhaitée, la courbe de référence différera).

Dans le présent mode de réalisation, la courbe de référence montrée à la figure 2 indique une vitesse d'enroulement de 35 tr / min au début de l'enroulement correspondant au diamètre minimum $D_{min}$ de la bobine (90 mm) et une vitesse d'enroulement de 8 tr/min à la fin de l'enroulement correspondant au diamètre maximum $D_{max}$ de la bobine (400 mm).

Le dispositif selon l'invention permet donc de contrôler très efficacement la vitesse d'enroulement du film sur la bobine afin de maintenir la vitesse de défilement linéaire de celui-ci constante.

Le mode de réalisation de l'invention ici-décrit n'a pas pour objet de réduire la portée de celle-ci. Il pourra donc y être apporté de nombreuses modifications sans sortir de son cadre. En particulier on notera que le bras utilisé pour présenter une autre forme que celle représentée et être positionné d'une façon différente. Les diamètres maximum et minimum de la bobine d'enroulement pourront bien sûr être différents.

**Revendications**

1.  Dispositif pour le contrôle de la vitesse d'enroulement d'un film (1) sur une bobine d'enroulement (2) actionnée par un moteur (3), ledit film présentant une vitesse linéaire de défilement prédéterminée,

    ledit dispositif étant caractérisé en ce qu'il comprend:

    -   un bras mobile (4) dont une extrémité libre (4a) repose sur une surface de ladite bobine d'enroulement (1) et dont l'autre extrémité (4b) est montée en rotation sur un axe de rotation (5);
    -   des moyens de mesure (6) de 1' angle a formé entre un plan P de référence et le plan P' passant par ladite extrémité libre et ledit axe de rotation;

    -   des moyens électroniques de calcul (7) permettant de déduire de l'angle a mesuré le diamètre correspondant D de la bobine;
    -   des moyens électroniques (8) permettant d'adapter en continu la vitesse d'enroulement ($V_{bobine}$) correspondant au diamètre D calculé pour maintenir ladite vitesse de défilement linéaire prédéterminée dudit film.

2.  Dispositif selon la revendication 1 caractérisé en ce que ladite surface de ladite bobine d'enroulement (2) sur laquelle repose ladite extrémité libre (4a) dudit bras (4) est la surface supérieure de ladite bobine (2) .

3.  Dispositif selon l'une quelconque des revendications 1 ou 2 caractérisé en ce que lesdits moyens (8) permettant d'adapter en continu la vitesse d'enroulement ($V_{bobine}$) utilisent une courbe de référence :

$$(V_{bobine}) = V_L / \Pi D$$

dans laquelle $V_L$ est la vitesse linéaire de défilement du film et D est le diamètre de la bobine.

4.  Dispositif selon l'une quelconque des revendications 1 à 3 caractérisé en ce que ladite extrémité libre (4a) dudit bras (4) est pourvue d'un galet fou (9) .

5.  Dispositif selon l'une quelconque des revendications 1 à 4 caractérisé en ce que ledit bras (4) présente une forme courbe.

6.  Dispositif selon l'une quelconque des revendications 1 à 5 caractérisé en ce qu'il comprend des moyens d'amplification de l'angle a mesuré.

7.  Dispositif selon la revendication 6 caractérisé en ce que lesdits moyens d'amplification de l'angle a mesuré incluent un système de couplage à double engrenage (8, 8a).

8.  Installation pour le croûtage de produits alimentaires incluant un film convoyeur en matière plastique défilant sur un support réfrigérant, ledit film étant extrait d'une bobine de stockage et étant enroulé sur une bobine d'enroulement après avoir transité sur le support réfrigéré,

    caractérisée en ce qu'elle inclut un dispositif de contrôle de la vitesse d'enroulement de ladite bobine selon l'une des revendications 1 à 7

Fig. 1

EP 0 921 086 A1

Fig. 2

EP 0 921 086 A1

| | Office européen des brevets | **RAPPORT DE RECHERCHE EUROPEENNE** | Numéro de la demande<br>EP 98 46 0054 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 11 21 179 B (SIEMENS-SCHUCKERTWERKE AKTIENGESELLSCHAFT) 4 janvier 1962<br>* colonne 3, ligne 7 - ligne 42 *<br>* colonne 4, ligne 14 - ligne 25 *<br>* colonne 4, ligne 44 - colonne 5, ligne 15 *<br>* colonne 6, ligne 18 - ligne 23; revendications; figures * | 1 | B65H23/00<br>A23L3/36 |
| A | FR 2 744 884 A (DEW ROGER) 22 août 1997<br>* page 4, ligne 14 - page 5, ligne 15; revendications 1-3,7,8; figures * | 1,8 | |
| A | FR 2 693 877 A (DEW ROGER) 28 janvier 1994<br>* page 3, ligne 26 - page 4, ligne 17; revendications; figures * | 1,8 | |
| | | | **DOMAINES TECHNIQUES RECHERCHES (Int.Cl.6)**<br><br>B65H<br>A23L |

Le présent rapport a été établi pour toutes les revendications

| Lieu de la recherche | Date d'achèvement de la recherche | Examinateur |
|---|---|---|
| LA HAYE | 17 mars 1999 | Haaken, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 98 46 0054

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-1999

| Document brevet cité au rapport de recherche | | Date de publication | Membre(s) de la famille de brevet(s) | | Date de publication |
|---|---|---|---|---|---|
| DE 1121179 | B | | AUCUN | | |
| FR 2744884 | A | 22-08-1997 | EP | 0881888 A | 09-12-1998 |
| | | | WO | 9730603 A | 28-08-1997 |
| | | | NO | 983789 A | 19-08-1998 |
| FR 2693877 | A | 28-01-1994 | AT | 135537 T | 15-04-1996 |
| | | | AU | 665449 B | 04-01-1996 |
| | | | AU | 4574693 A | 14-02-1994 |
| | | | CA | 2099515 A | 22-01-1994 |
| | | | DE | 69301873 D | 25-04-1996 |
| | | | DE | 69301873 T | 24-10-1996 |
| | | | DK | 580466 T | 22-07-1996 |
| | | | EP | 0580466 A | 26-01-1994 |
| | | | ES | 2087679 T | 16-07-1996 |
| | | | FI | 946046 A | 22-12-1994 |
| | | | WO | 9402037 A | 03-02-1994 |
| | | | GR | 3020199 T | 30-09-1996 |
| | | | NO | 950214 A | 20-01-1995 |
| | | | NZ | 254174 A | 26-03-1996 |

EPO FORM P0460

Pour tout renseignement concernant cette annexe : voir Journal Officiel de l'Office européen des brevets, No.12/82